# EUROPEAN PATENT SPECIFICATION

(11) **EP 0 690 741 B1**
(45) Date of publication and mention of the grant of the patent: **06.08.1997**
(21) Application number: 94910466.5
(22) Date of filing: 24.03.1994
(51) Int. Cl.: B01D 39/16

(54) **FILTRATION MEDIUM**
FILTERMEDIUM
MOYEN DE FILTRATION

(30) Priority: 26.03.1993 GB 9306289
(43) Date of publication of application: 10.01.1996
(73) Proprietor: British United Shoe Machinery Limited, Leicester LE4 5BX (GB)
(72) Inventor: GREATOREX, Anthony Thomas, Syston, Leicestershire LE7 8NN (GB)
(74) Representative: Parnham, Kevin
(86) International application number: GB9400611
(87) International publication number: WO9422552

(56) References cited:
- EP-A- 0 190 425
- EP-A- 0 202 617
- EP-A- 0 515 045

## Description

This invention is concerned with a filtration medium, more particularly such a medium comprising a non-woven air-permeable fibre fabric made of thermoplastic fibres, and also with filter units made therefrom.

It is known to use as a filtration medium a felted fabric, more particularly a non-woven air-permeable fibre fabric made of polyester fibres. For more specialised purposes, furthermore, other fibres have been proposed and used, e.g. polyimide fibres and polyphenyl sulphide fibres.

Filter units made from such filtration media have conventionally been in the form of bags, usually assembled on a supporting frame, but more recently filter units have become available which are made up of two portions of the fibre fabric each of which is corrugated, and the fabric portions are joined together along the "peaks" of the corrugations thus to form a plurality of parallel pockets. It will of course be appreciated that, by using corrugated material, the surface area of the filter for a given overall size can be increased significantly.

While fibre fabric materials have been found to give good filtration characteristics in general, they tend to provide "hairy" surfaces which tend to entrap dust during the filtration operation and do not reliably then release the dust in conventional surface cleaning operations, whether by vibration or reverse jet pulsing. In order to combat this problem, conventionally a singeing or calendering operation takes place on the material after it has been formed thus to reduce the "hairiness" of the surface, and more recently it has been proposed to provide a coating e.g. of P.T.F.E. on the outer surface of the filtration medium, again in order to enhance dust release and indeed to reduce the risk of dust entrapment. To this end, the surface finish is generally regarded as "microporous" thereby overcoming the disadvantage of conventional filtration media which are of relatively low density (typically in the order of 300 to 325kg/m³) and thus of a relatively large pore structure.

It is thus one of the various objects of the present invention to provide an improved filtration medium in which a relatively smooth surface finish is achieved, without significant "hairiness", but without reliance upon a subsequent surface finishing operation.

The invention thus provides a filtration medium consisting of a non-woven air-permeable fabric made of thermoplastic fibres characterised in that, the medium has a density in the range of 450 to 950kg/m³, a gauge in the range 0.7 to 1.25mm and the medium has a pressure drop in the range 75 to 1250 Pa (as measured according to BS4400) at an air velocity of 1.6 m/min.

Using a filtration medium with the above-identified features, not only are good dust release surface properties achieved without the need for any subsequent surface finishing operation, but also, because of the tighter pore structure provided in the higher density material, lower emission levels, i.e. reduced amounts of dust passing through the medium.

Filtration media in accordance with the invention may suitably comprise fibre fabric made from any one of the following:
- polyimide fibres
- polyphenyl sulphide fibres
- polyester fibres
- a blend of polyester and polypropylene fibres
- a blend of polyester and bi-component fibres.
Moreover, one fibre fabric in accordance with the invention, particularly suitable for use in conditions involving continuous temperatures in the order of 130°C, with surges up to, say, 150°C, has been made from a blend of polyester and bi-component fibres comprising up to 15% of a bi-component fibre comprising two components of different melt temperatures, the lower of which is at least 170°C.

The invention further provides a filter unit made from a filtration medium consisting of a non-woven air-permeable fibre fabric made of thermoplastic fibres as described above and as defined in claim 1, wherein the unit comprises at least two portions of such medium, said portions constituting wall portions through which air to be filtered can pass in a direction from an outer to an inner surface thereof while preventing the passage therethrough of dust and/or other debris carried by the air, and which are secured together so as to form therebetween one or more passages along which the air passing through the wall portions can be drawn off. Whereas such filter unit may be in the form of a so-called bag type filter, which may be provided with an internal support frame, the filtration medium in accordance with the invention is relatively rigid and thus lends itself also to self-supporting filters, particularly, but not exclusively, to those comprising two corrugated wall portions secured together along peaks of the corrugations thereof thus to form a plurality of said passages, the passages each being closed at one end and open at the other for connection to a suitable suction source.

There now follows a detailed description, to be read with reference to the accompanying drawings, of one filter unit in accordance with the invention. It will of course be appreciated that this filter unit, and also the filter unit in accordance with the invention. It will of course be appreciated that this filter unit, and also the filtration medium from which it is made, have been selected for description merely by way of exemplification of the invention and not by way of limitation thereof.

In the accompanying drawings:
Fig. 1 is a fragmentary view of a filter unit in accordance with the invention; and
Fig. 2 is a sectional view along the line II-II of Fig. 1.

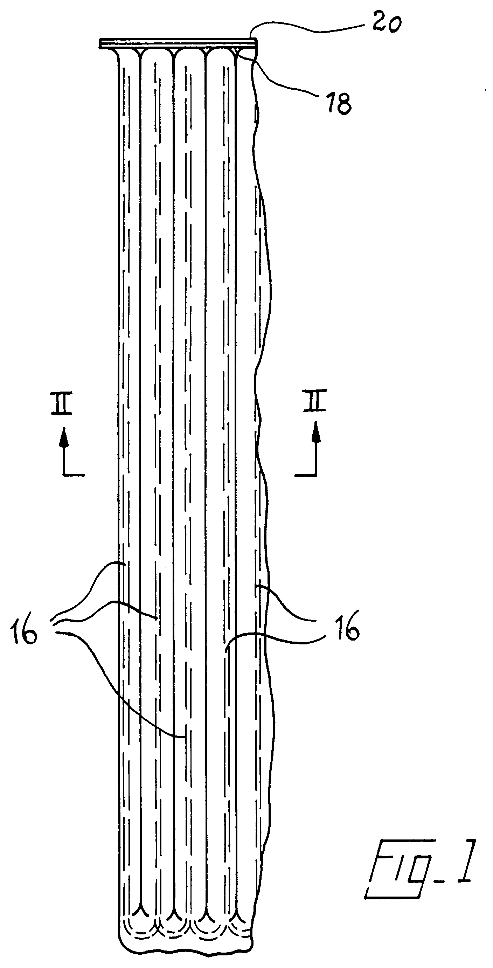

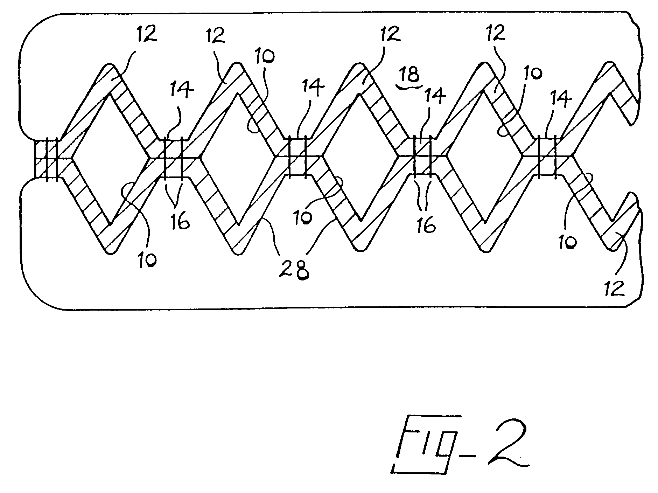

The filter unit shown in Figures 1 and 2 has a plurality of passages 10 defined by rigid corrugated air-permeable wall portions 12 through which air to be filtered can pass and be drawn off along said passages but which prevent the passage therethrough of dust and/or other debris carried by such air. The passages 10 are each of a generally diamond cross-section shape, the wall portions 12 being joined together along the peaks 14 of the corrugations by two parallel rows of stitches 16. At one end, the lower end in Figure 1, each passage 10 is closed by the double row of stitches following an arcuate path to meet the stitches extending along the adjacent peak 14, while at the opposite end the passages are open. (In other filter units in accordance with the invention the one ends of the passages 10 may be closed by other means, e.g. heat sealing under pressure or metallic clips.) Along the edge of the filter unit, adjacent the open ends of the passages, furthermore, a flange 18 is formed integral with the wall portions 12, said flange being laminated with a reinforcing layer 20 of generally the same outline as the flange, and said reinforcing layer having formed therein apertures which are aligned with the open ends of the passages 10. The flange serves to provide a mounting for the filter unit in a suitable filter assembly.

In the manufacture of the aforementioned filter unit, two portions of a suitable fibre fabric are laid in face-to-face contact (said portions being provided either by the fabric being folded over on itself or by two separate portions of the fabric) and the portions are then secured together by the rows of double stitches 16 as shown in Figure 1. As already mentioned, at the closed end of the passages 10 (the lower end shown in Figure 1) the stitches follow an arcuate path and join up with the stitches from the adjacent passage, thus closing one end of each passage, while at the opposite end the rows of parallel stitches stop short of the edge of the fabric, which is then folded outwardly to form the flange 18 to which is then secured a further layer of the reinforcing material 20, of similar outline to the flange 18. It should be noted that if the fibre fabric exhibits tendencies to adhere to itself, e.g. under conditions of heat and pressure, the flange 18 and layer 20 will adhere during the manufacturing process; otherwise, an intermediate bonding layer (not shown) should be provided between the flange 18 and the material layer 20. With the portions of fabric secured by stitching as aforesaid, thereby forming passages 10 in the form of pockets in the material, formers (not shown) are inserted into each such passage or pocket. Each former has a generally diamond-shaped cross-section and thus the wall portions 12 defining each passage are themselves shaped to a corresponding diamond shape. The fabric, with the formers thus inserted and the passages thus shaped, is placed between two presser members (also not shown) which having mating corrugated surfaces, the arrangement being such that, with the corrugations arranged peak-to-peak, opposed "valleys" correspond in shape to the shape of the formers and are spaced so as to each receive a former, with the material held thereon being accommodated in the valley. Between the valleys, moreover, the peaks are flattened and correspond to, and impart the desired shape to, the regions of the fibre fabric which have been stitched. The rows of stitches are preferably arranged such that the stitches are formed along the edges of the flattened peaks.

One method as set out above is described in detail in EP-A-0 515 045. In using such method, however, pressure to a predetermined value was applied between the presser members, the surface of each of which was relatively smooth, as was also the surface of the formers, to cause compacting of the material from its initial gauge (thickness) of about 3.5mm, as well as providing relatively smooth surfaces by reason of the contact under pressure with the smooth surfaces of the presser members and formers. In practice, such compression or compaction produced a fabric having a density in the order of 300 to 325kg/m³. The surface of the wall portions of the filter unit (i.e. of the filtration medium) thus created was nevertheless relatively "hairy", e.g. in comparison with a high density paper filtration medium, and it was therefore proposed that, with a view to enhancing smoothness, a microporous coating of P.T.F.E. or the like should be applied.

By contrast, the filtration medium in accordance with the present invention is pressed under controlled conditions to provide a denser product in which, by reason not only of the smoothness of the surface of the presser members and former but also by reason of the additional compression, a much smoother, less hairy surface is achieved than has previously been the case, while nevertheless retaining the air-permeability of the material. More particularly, the material is pressed to a predetermined gauge, and thus preferably pressure is applied to compress the material to a limit determined by one or more physical stops, rather than merely the pressure being controled. Moreover, it has been found advantageous to maintain this compression during the subsequent cooling after forming of the two portions of material. In practice it has been found that a material of the aforementioned type having a gauge in the range 0.70 to 1.25mm provides a suitable filtration medium for most applications, especially (but not exclusively) when made up into the corrugated type of filter unit referred to above.

In order to achieve the desired densities with a material, say, of 1mm gauge, it will be necessary for the initial weight of the material, i.e. the material prior to compression, to be in the range 450g to 950g/m². If, on the other hand, a final gauge which is of greater or lesser than 1mm is required, then the range within which the initial (uncompressed) weight of the material must lie will depend upon the amount of compression/densification required.

The manufacture of filtration media in accordance with the present invention may be effected using any of the materials referred to in EP-A-0 515 045. In carrying out experimental work a range of materials was used, in various gauges and weights, and their pressure drops and emission levels were then measured in a BS4400 test (using an air flow of 16 litres/min over an area of 100cm²). Table A sets out the results of these various experiments. It should be noted that the materials listed in Samples 1,3,5,6 and 9 to 12 were provided by a material comprising polyester staple fibre with up to 10% by weight of bi-component fibre identified as T252 and supplied by Hoechst. In the case of Samples 1,3 and 9 a single-layer fabric was used, in Sample 11 a two-layer material, in Samples 5 and 6 a four-layer material and in Samples 10 and 12 a seven-layer material. The materials listed in the remaining Samples were all single-layer fabrics of polyester staple fibres.

**TABLE A**

| | PRE-COMPRESSION | | POST-COMPRESSION | | | |
|---|---|---|---|---|---|---|
| SAMPLE | WEIGHT (Kg/m²) | GAUGE (nominal) (mm) | GAUGE (average) (mm) | DENSITY (Kg/m³) | PRESSURE DROP (Pa) | EMISSION LEVEL (%) |
| 1 | 0.493 | 4.00 | 0.95 | 520 | 80 | 54.0 |
| 2 | 0.522 | 4.00 | 0.96 | 540 | 83 | 51.0 |
| 3 | 0.500 | 4.00 | 0.93 | 540 | 89 | 52.0 |
| 4 | 0.555 | 4.00 | 0.99 | 560 | 100 | 52.0 |
| 5 | 0.567* | 4.00 | 1.00 | 570 | 102 | 41.5 |
| 6 | 0.570* | 4.00 | 0.97 | 590 | 116 | 39.4 |
| 7 | 0.505 | 4.00 | 0.78 | 640 | 152 | 52.0 |
| 8 | 0.540 | 4.00 | 0.80 | 670 | 178 | 48.0 |
| 9 | 0.502 | 4.00 | 0.73 | 690 | 182 | 48.5 |
| 10 | 0.997* | 8.00 | 1.16 | 860 | 1108 | 14.9 |
| 11 | 0.990* | 8.00 | 1.12 | 880 | 1027 | 18.6 |
| 12 | 0.997* | 8.00 | 1.11 | 900 | 1143 | 16.2 |

| | | | | | | |
|---|---|---|---|---|---|---|
| * Multi-layer fabrics | | | | | | |

There now follows a description of one Example of material which has been found suitable for use in the manufacture of a filtration medium in accordance with the invention.

### Example

A non-woven fibre felt was produced using a blend of polyester fibres and bi-component fibres in a ratio of 90:10 parts by weight. The polyester fibres were of 1.5 decitex and 50mm in length and the bi-component fibres were identified as K170 supplied by EMS-Grilon S.A., of CH-7013 Domat/EMS, Switzerland, said fibres being of the core/sheath type and having an average decitex of 3.0 and a length of 50mm, and the melt temperature of the sheath component being in the order of 170°C. The weight of the felt produced by the needle punching operation was about 0.500kg/m² and the nominal gauge 4.0mm.

Two portions of the felt thus produced were laid in face-to-face contact and stitched as described above to form pockets therein open at one end and formers were then inserted into each of the pockets, all as described above. The formers thus carrying the formed portions of the felt were then arranged between the corrugated presser members, which were then closed and the presser members were heated to a temperature in the order of 180°C, thus causing the sheath component to melt and flow and thus bond the core fibres together and also to the polyester fibres. At the same time, pressure was applied between the presser members thus not only to enhance the bond but also to compress the felt, the applied pressure being sufficient to close the presser members to a stop, thus to compress the material to a predetermined gauge as determined by the stop (in this case 1.00mm). The presser members were held under such pressure, furthermore, for an initial heating period of some fifteen minutes and thereafter for a cooling period also of some fifteen minutes so that the predetermined some fifteen minutes and thereafter for a cooling period also of some fifteen minutes so that the predetermined gauge of the material was maintained until consolidation had taken place and a relatively rigid self-supporting filter unit had thus been produced.

It was found that a filtration medium produced in this manner, and indeed filter units produced therefrom had good dust release properties and filtration properties without any requirement for a surface finishing operation to be performed thereon. In the particular instance, moreover, the filter unit thus produced could operate at temperatures up to 130°C (continuous) and could withstand surges in temperature up to 150°C.

Whereas in the foregoing Example, and indeed in the foregoing description, reference has been made to manufacturing a filter unit of the corrugated surface type, it will be appreciated that the invention is more broadly concerned with the manufacture of a filtration medium which can be used not only in such filter units, but also in filter units which provide flat or substantially flat filtration surfaces, as well as other configurations, e.g. circular, as may from time to time be required. Moreover, whereas reference has been made in the foregoing to preparing the fabric by a needle punching operation, it will be appreciated that fabrics made using other non-woven techniques may be employed, e.g. hydro-entangled or stitch-bonded.

## Claims

1. A filtration medium consisting of a non-woven air-permeable fabric made of thermoplastic fibres characterised in that, the medium has a density in the range of 450 to 950kg/m³ , a gauge in the range 0.7 to 1.25 mm and the medium has a pressure drop in the range 75 to 1250 Pa (as measured according to BS4400) at an air velocity of 1.6 m/min.

2. A filter unit made from a filtration medium comprising a non-woven air-permeable fibre fabric made of thermoplastic fibres in accordance with Claim 1, said unit being characterised by at least two portions of such medium, said portions constituting wall portions (12) through which air to be filtered can pass in a direction from an outer to an inner surface thereof while preventing the passage therethrough of dust and/or other debris carried by the air, and which are secured together so as to form therebetween one or more passages (10) along which the air passing through the wall portions can be drawn off.

3. A filter unit according to Claim 2 characterised by corrugated wall portions (12) secured together along peaks of the corrugations thereof thus to form a plurality of said passages (10), the passages (10) each being closed at one end and open at the other for connection to a suitable suction source.

4. A filter unit according to Claim 2 characterised in that the fibre fabric is made from any one of the following:
- polyimide fibres
- polyphenyl sulphide fibres
- polyester fibres
- a blend of polyester and polypropylene fibres
- a blend of polyester and bi-component fibres

5. A filter unit according to Claim 2 characterised in that the fibre fabric is made from a blend of polyester and bi-component fibres, said blend comprising up to 15% by weight of a bi-component fibre comprising two components of different melt temperatures, the lower of which is at least 170°C.

## Patentansprüche

1. Ein Filtriermedium, das aus einem aus Thermoplast-Fasern hergestellten luftdurchlässigen Faservliesstoff besteht,
dadurch gekennzeichnet, daß das Medium eine Dichte im Bereich von 450 bis 950 kg / m³ hat, eine Dicke im Bereich von 0,7 bis 1,25 mm und einen Druckabfall im Bereich von 75 bis 1250 Pa (gemäß BS4400 gemessen) bei einer Luftgeschwindigkeit von 1,6 m / Min.

2. Eine aus einem Filtriermedium, welches einen aus Thermoplast-Fasern hergestellten, luftdurchlässigen Faserstoff in Übereinstimmung mit Anspruch 1 umfaßt, hergestellte Filtereinheit,
gekennzeichnte durch mindestens zwei Abschnitte eines solchen Mediums, wobei die genannten Abschnitte Wandabschnitte (12) bilden, durch welche die zu filternde Luft von einer äußeren Oberfläche zu einer inneren Oberfläche dieser Wandabschnitte durchtreten kann, während der Durchgang von Staub und / oder anderen Verunreinigungen, die solche Luft trägt, verhindert wird, und welche miteinander verbunden werden, um zwischen diesen Wandabschnitten einen Durchgang (10) oder mehrere Durchgänge (10) zu bilden, entlang welchem oder welcher die durch die Wandabschnitte durchtretende Luft weggezogen werden kann.

3. Eine Filtereinheit gemäß Anspruch 2,
gekennzeichnet durch geriffelte Wandabschnitte (12), die entlang der Spitzen der Rillen dieser Wandabschnitte miteinander verbunden sind, um so mehrere der genannten Durchgänge (10) zu bilden, wobei die Durchgänge (10) jeweils an einer Seite geschlossen und an der anderen offen sind, um an eine geeignete Absaugquelle angeschlossen werden zu können.

4. Eine Filtereinheit gemäß Anspruch 2,
dadurch gekennzeichnet, daß der Faserstoff aus einer der folgenden Fasern hergestellt ist:
- Polyimidfasern
- Polyphenyl-Sulfidfasern
- Polyesterfasern
- einer Mischung aus Polyester- und Polypropylenfasern
- einer Mischung aus Polyester- und Zweikomponentenfasern.

5. Eine Filtereinheit gemäß Anspruch 2,
dadurch gekennzeichnet, daß der Faserstoff aus einer Mischung von Polyester- und Zweikomponenten-Fasern hergestellt ist, wobei die genannte Mischung mit einem Gewichtsanteil von bis zu 15 % eine Zweikomponentenfaser mit zwei Komponenten unterschiedlicher Schmelztemperaturen umfaßt, wobei die untere Schmelztemperatur mindestens170° C beträgt.

## Revendications

1. Milieu de filtration constitué par un tissu non tissé perméable à l'air, fabriqué en fibres thermoplastiques, caractérisé en ce que le milieu possède une densité dans le domaine de 450 à 950 kg/m³, une épaisseur dans le domaine de 0,7 à 1,25 mm, le milieu étant soumis à une chute de pression dans le domaine de 75 à 1250 Pa (telle que mesurée conformément à la norme BS4400) à un débit d'air de 1,6 m/min.

2. Unité de filtre fabriquée à partir d'un milieu de filtration comprenant un tissu fibreux non tissé perméable à l'air, fabriqué en fibres thermoplastiques selon la revendication 1, ladite unité étant caractérisée par au moins deux portions dudit milieu, lesdites portions constituant des portions de parois (12) à travers lesquelles de l'air à filtrer peut passer dans une direction allant de leur surface externe à leur surface interne tout en empêchant le passage de poussières et d'autres débris transportés par l'air à travers elles, les portions des parois étant fixées l'une à l'autre de façon à former entre elles un ou plusieurs passages (10) le long desquels l'air traversant les portions de parois peut être éliminé par aspiration.

3. Unité de filtre selon la revendication 2, caractérisée par des portions de parois cannelées (12) fixées l'une à l'autre le long des sommets de leurs cannelures pour former ainsi plusieurs desdits passages (10), les passages (10) étant fermés à une extrémité et ouverts à l'autre extrémité pour être reliés à une source d'aspiration appropriée.

4. Unité de filtre selon la revendication 2, caractérisée en ce que le tissu fibreux est fabriqué à partir de l'une quelconque des fibres ci-après:
- des fibres de polyimide
- des fibres de polyphénylsulfure
- des fibres de polyester
- un mélange de fibres de polyester et de fibres de polypropylène
- un mélange de fibres de polyester et de fibres à deux composants.

5. Unité de filtre selon la revendication 2, caractérisée en ce que le tissu fibreux est fabriqué à partir d'un mélange de fibres de polyester et de fibres à deux composants, ledit mélange comprenant, jusqu'à concurrence de 15% en poids, une fibre à deux composants comprenant deux composants possédant des températures de fusion différentes dont la plus basse s'élève à au moins 170°C.
